# EUROPÄISCHE PATENTSCHRIFT

(11) **EP 1 155 770 B1**
(45) Veröffentlichungstag und Bekanntmachung des Hinweises auf die Patenterteilung: **04.08.2004**
(21) Anmeldenummer: 01111230.7
(22) Anmeldetag: 15.05.2001
(51) Int. Cl.: B23P 19/04, F02F 7/00

(54) **Verfahren und Vorrichtung zur Montage eines Verbundes aus Gehäuse, Wellen und Drehmassen**
Method and device for assembling an assembly comprising a housing, shafts and rotating masses
Procédé et dispositif pour assembler un ensemble comportant un boitier, des arbres et de masses tournantes

(30) Priorität: 19.05.2000 DE 10024768
(43) Veröffentlichungstag der Anmeldung: 21.11.2001
(73) Patentinhaber: Volkswagen Aktiengesellschaft, 38436 Wolfsburg (DE)
(72) Erfinder: Petersen, Dirk, 38104 Braunschweig (DE)

(56) Entgegenhaltungen:
- WO-A-01/14097
- US-A- 4 597 365
- US-A- 5 033 941

## Beschreibung

Die Erfindung betrifft ein Montageverfahren für einen Verbund, insbesondere für ein Massenausgleichsgetriebe oder einen Zylinderkopf, mit in einem Gehäuse auf wenigstens einer das Gehäuse durchdringenden Welle drehbar gelagerten Elementen, wie beispielsweise Ausgleichsmassen, Nocken, Zahnrädern, insbesondere für ein Kraftfahrzeug, gemäß dem Oberbegriff des Anspruchs 1. Die Erfindung betrifft ferner eine Vorrichtung zur Montage von einem Verbund, insbesondere von einem Massenausgleichsgetriebe oder einem Zylinderkopf, mit in einem Gehäuse auf wenigstens einer das Gehäuse durchdringenden Welle drehbar gelagerten Elementen, wie beispielsweise Ausgleichsmassen, Nocken, Zahnrädern, insbesondere für ein Kraftfahrzeug, gemäß dem Oberbegriff des Anspruchs 9 (siehe, z.B., US-A-4 597 365).

Zum Herstellen einer besseren Laufruhe von Vierzylindermotoren ist es bekannt, entsprechende Ausgleichgetriebe vorzusehen. Beispielsweise ein im Motorenbau bekannter Lanchaster-Ausgleich besteht im wesentlichen aus zwei gegenläufigen Unwuchtwellen, die mit doppelter Motorendrehzahl rotieren. Dabei kompensieren sich die horizontalen Anteile der Massenkräfte, während sich die vertikalen addieren. Sie wirken den freien Kräften zweiter Ordnung des Kurbeltriebes entgegen und eliminieren diese im Idealfall vollständig, so daß keine Krafteinleitung in die Motorenlagerung erfolgt. Derartige Ausgleichgetriebe sind jedoch mit einem hohen Montageaufwand verbunden.

Herkömmliche Montageverfahren für derartige Ausgleichgetriebe haben den Nachteil, daß sie wegen eines Fertigungsaufwand für Trennebenen, einer Positionierung von geteilten Gehäusen mittels Zentrierstiften und eines Montageaufwandes für Vorbereitungen im Zusammenbau und Demontage aufwendig sowie kosten- und zeitintensiv sind.

Der vorliegenden Erfindung liegt daher die Aufgabe zugrunde, ein Montageverfahren der obengenannten Art zur Verfügung zu stellen, wobei die obengenannten Nachteile überwunden werden und ein einfacher, kostengünstiger und gleichzeitig paßgenauer Zusammenbau erzielt wird.

Diese Aufgabe wird erfindungsgemäß durch ein Verfahren der o.g. Art mit den in Anspruch 1 angegebenen Verfahrensschritten sowie durch eine Vorrichtung der o.g. Art mit den in Anspruch 9 gekennzeichneten Merkmalen gelöst. Vorteilhafte Ausgestaltungen der Erfindung sind in den abhängigen Ansprüchen angegeben.

Dazu sind bei einem Verfahren der o.g. Art erfindungsgemäß folgende Schritte vorgesehen:
(a) Anordnen wenigstens einiger der einzelnen Elemente derart, daß die Elemente gemäß ihrer späteren relativen Position im Verbund zueinander angeordnet sind und entsprechende Durchführungen der Elemente für die Welle von auf einer Welle gemeinsam zu lagernden Elementen miteinander fluchten,
(b) Überstülpen des Gehäuses über die Elemente derart, daß entsprechende Durchführungen im Gehäuse für die wenigstens eine Welle mit den entsprechenden Durchführungen der Elemente fluchten und
(c) Durchschieben der Welle durch die Durchführungen der Elemente und des Gehäuses.

Dies hat den Vorteil, daß eine einfache und funktionssichere Montage erzielt wird.

Ein im wesentlichen kraftfreies Einschieben der Welle erzielt man dadurch, daß die Welle vor Schritt (c) derart abgekühlt wird, daß diese einen Außendurchmesser aufweist, der ein im wesentlichen kraftfreies Einschieben der Welle durch alle Durchführungen erlaubt.

Für ein einfaches Einschieben der Welle werden wenigstens einige Elemente vor Schritt (c) derart erwärmt, daß diese einen Innendurchmesser aufweisen, der ein im wesentlichen kraftfreies Einschieben der Welle durch alle Durchführungen erlaubt.

Zum Vermeiden einer zu starken Abkühlung von erwärmten Elementen während der Ausführung des Schrittes (b), werden die erwärmten Elemente in einem zusätzlichen Schritt erst nach Schritt (b) und vor Schritt (c) erwärmt und in der in Schritt (a) genannten Weise angeordnet.

Alternativ wird in Schritt (c) bei Raumtemperatur aller Teile die Welle mittels einer Presse unter Kraftaufwand eingeschoben.

Eine besonders paßgenaue und betriebssichere Preßverbindung zwischen Welle und Elementen erzielt man dadurch, daß nach Schritt (c) die eingeschobene Welle einer Innendruck-Umformung unterzogen wird, so daß nacheinander oder gleichzeitig der Außendurchmesser der Welle wenigstens im Bereich der Elemente aufgeweitet wird.

Zweckmäßigerweise wird die Welle derart eingeschoben, daß sich ein vorbestimmtes axiales Spiel einstellt.

Eine Vermeidung des Verschiebens der Elemente beim Einschieben der Welle erzielt man dadurch, daß in Schritt (a) die Elemente an einen festen axialen Anschlag angelegt werden.

Ferner ist es bei einer Vorrichtung der o.g. Art erfindungsgemäße vorgesehen, daß diese Aufnahmen zum Einlegen oder Anordnen der Elemente und wenigstens einer Welle derart aufweist, daß die Elemente gemäß ihrer späteren relativen Position im Verbund zueinander angeordnet sind und entsprechende Durchführungen für die Welle von auf einer Welle gemeinsam zu lagernden Elementen miteinander und mit der zugehörigen Welle fluchten, und daß die Vorrichtung eine Auflage für das Gehäuse derart aufweist, daß entsprechende Durchführungen im Gehäuse mit der Welle und den Durchführungen der Elemente fluchten.

Dies hat den Vorteil, daß eine einfache und funktionssichere Montage erzielt wird.

Um ein Verrutschen der Elemente während des Einschiebens der Welle zu verhindern weisen die Aufnahmen für die Elemente axiale Anschläge und/oder seitliche Führungen auf.

Die Vorrichtung weist beispielsweise eine Vorrichtung mit hydraulisch oder pneumatisch betätigtem Zylinder zum Einschieben der Welle auf.

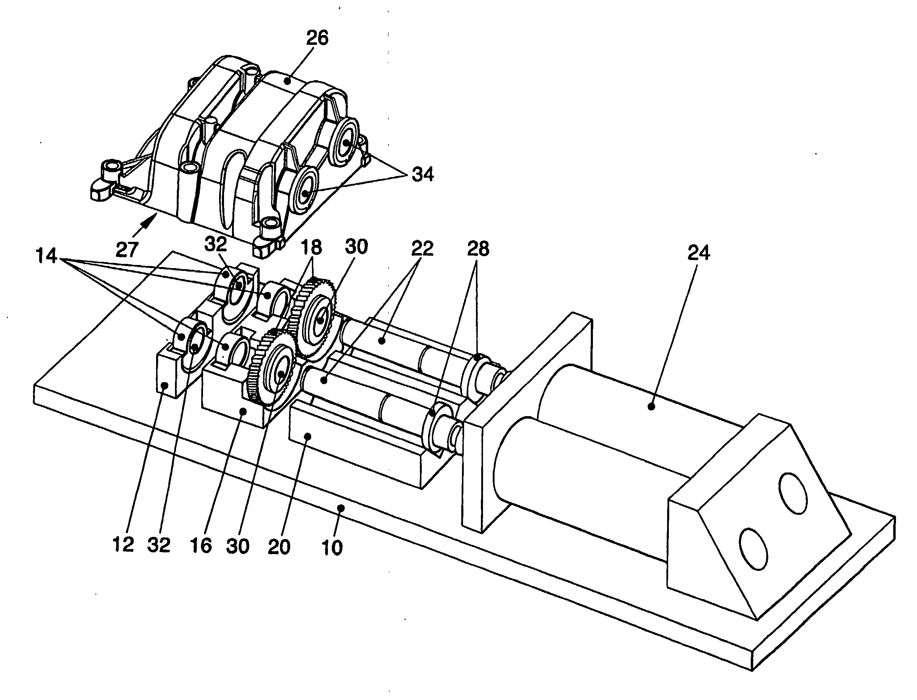

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt in der einzigen Figur eine bevorzugte Ausführungsform einer erfindungsgemäßen Vorrichtung zum Ausführen des erfindungsgemäßen Verfahrens.

Nachfolgend wird die Erfindung beispielhaft anhand eines Massenausgleichsgetriebes erläutert. Eine hierfür vorgesehene, erfindungsgemäße Montagevorrichtung umfaßt eine Grundplatte 10, Auflagen 12 für Ausgleichsgewichte 14, Auflagen 16 für weiter Ausgleichgewichte 14 sowie für Zahnräder 18, Auflagen 20 für zwei Ausgleichswellen 22 und eine Vorrichtung 24 zum Einschieben der Wellen 22. Um die Auflagen 12 und 16 herum ist die Grundplatte 10 derart ausgebildet, daß diese eine Auflage für ein Gehäuse 26 bildet, welches an einer Seite 27 offen ist.

Die Auflagen 12 und 16 sind derart ausgebildet, daß die eingelegten Elemente bzw. Drehmassen 14, 18 in ihrer späteren relativen Position im Gehäuse 26 bei fertig montiertem Massenausgleichsgetriebe angeordnet sind. Die Wellen 22 weisen jeweils einen Bund 28 auf.

Bei dem erfindungsgemäßen Verfahren werden zunächst die vier Ausgleichsgewichte 14 in die Auflagen 12 bzw. 16 eingelegt. Hierbei werden diese durch seitliche Führungen ausgerichtet, so daß die Schwerpunktlagen der Gegengewichte die gleiche Position haben. Die beiden Zahnräder 18 werden in die Auflage 16 eingelegt, wobei deren Zähne bereits ineinander greifen. Die Zahnräder 16 liegen auf ihrem jeweiligen Kopfkreisdurchmesser auf und jeweilige Nabenmitten von Durchführungen 30 der Zahnräder 18 für die Wellen 22 fluchten mit jeweiligen Nabenmitten der Durchführungen 32 der Ausgleichsgewichte 14.

Anschließend wird das Gehäuse 26 über die Ausgleichsgewichte 14 und die Zahnräder 16 gestülpt und auf der Grundplatte 10 abgesetzt. Jetzt befinden sich entsprechende Mittelpunkten der Bohrungen 34 für Gleitlager im Gehäuse 26 und die Mittelpunkte der Durchführungen 30, 32 der Ausgleichsgewichte 14 und Zahnräder 18 auf einer Linie. Die Ausgleichswellen 22 werden mit flüssigem Stickstoff auf minus 210°C abgekühlt. Die unterkühlten Ausgleichswellen 22 können dann nahezu kraftfrei bis zum Bund 28 in das Gehäuse 26 und durch die Drehmassen 14, 18 hindurch eingeführt werden. Durch die anschließende Erwärmung der Ausgleichswellen 22 entsteht zwischen den Ausgleichsgewichten 14 sowie den Zahnräder 18 zur jeweiligen Ausgleichswelle 22 eine Preßverbindung und ein definiertes axiales Spiel in einem vorderen Fanglager.

In einer alternativen Ausführungsform des erfindungsgemäßen Verfahrens werden die Ausgleichsgewichte 14 und die Zahnräder 18 wie zuvor beschrieben an einen festen axialen Anschlag angelegt, der an den Aufnahmen 12 und 16 ausgebildet ist. Das Gehäuse 26 wird wiederum, wie oben erläutert, übergestülpt und auf der Grundplatte 10 abgelegt. Anschließend werden die Ausgleichswellen 22 bei Raumtemperatur mittels der Presse 24 unter Kraftaufwand in das Gehäuse 26 und durch die Drehmassen 14, 18 hindurch eingeführt. Hierbei wird nicht auf Anschlag eingepreßt, sondern die Einpreßtiefe so gesteuert, daß ein definiertes axiales Spiel entsteht.

In einer weiteren alternativen Ausführungsform des erfindungsgemäßen Montageverfahrens werden die Ausgleichsgewichte 14 auf ca. 230°C erhitzt. Die erhitzten Ausgleichsgewichte 14 werden dann, wie zuvor beschrieben, in die Auflagen 12 bzw. 16 eingelegt. Die Zahnräder 18 werden mit Raumtemperatur, wie zuvor beschrieben, gegen den festen axialen Anschlag in die Auflagen 16 eingelegt. Anschließend wird wiederum das Gehäuse 26 übergestülpt und auf der Grundplatte 10 abgelegt. Daraufhin werden bei Raumtemperatur die Ausgleichswellen 22 mittels der Presse 24 unter Kraftaufwand in das Gehäuse und durch die Drehmassen 14, 18 hindurch eingeführt. Hierbei wird wiederum nicht auf Anschlag eingepreßt, sondern die Einpreßtiefe wird so gesteuert, daß ein definiertes axiales Spiel entsteht.

Um ein Abkühlen der erhitzen Ausgleichsgewichte 14 während des Aufsetzens des Gehäuses 26 zu vermeiden, werden alternativ die Ausgleichsgewichte 14 erst nach dem Überstülpen des Gehäuses 26 erhitzt und den Auflagen 12 bzw. 16 in der einzigen Fig. von unten zugeführt. Zweckmäßigerweise sind hierzu die Auflagen 12 bzw. 16 für die Ausgleichsgewichte 14 an einer dem Gehäuse 26 abgewandten Seite offen bzw. schachtartig ausgebildet.

In einer weiteren alternativen Möglichkeit des Montageverfahrens werden die Ausgleichsgewichte 14 und die Zahnräder 18 wieder, wie oben beschrieben, in die Auflagen 12 bzw. 16 eingelegt und das Gehäuse 26 darüber gestülpt. Die Ausgleichswellen 22 sind nun als Hohlwellen ausgestaltet und werden mit Untermaß an das Gehäuse 26 weitgehend kraftfrei eingeführt. Hierbei wird zwischen Gehäuse 26 und Bund 28 der Ausgleichswellen 22 ein definiertes axiales Spiel eingestellt. Die Wellen 22 sind im Gehäuse 26 im Durchmesser geschlossen und nach außen offen. An dem außerhalb vom Gehäuse 26 liegenden Bund 28 der Wellen 22 wird im Innendurchmesser ein Hochdruckanschluß vorgesehen. Nach dem Einführen bzw. Einschieben der Ausgangswellen 22 in das Gehäuse 26 und durch die Drehmassen 14, 18 hindurch bis zu einer vorbestimmten Position werden diese Ausgleichswellen 22 einer Innenhochdruck-Umformung im Gehäuse 26 unterzogen, wobei nacheinander oder gleichzeitig der Außendurchmesser der Ausgleichswellen 22 wenigstens im Bereich der Ausgleichsgewichte 14 und der Zahnräder 18 aufgeweitet wird. Hierdurch wird mittels Innenhochdruck-Umformung eine Preßverbindung hergestellt.

Das erfindungsgemäße Verfahren wurde voranstehend lediglich beispielhaft anhand eines Massenausgleichsgetriebes beschrieben. Dieses Verfahren ist jedoch ohne weiteres auch auf eine Montage eines Zylinderkopfes oder jede andere Art von Vorrichtung anwendbar, die in einem Gehäuse auf einer Welle drehbar gelagerte Drehmassen aufweist, wobei die Welle bzw. Wellen eine Gehäusewandung durchdringt bzw. durchdringen. Bei der Montage des Zylinderkopfes gemäß dem erfindungsgemäßen Verfahren werden Nocken auf entsprechenden Auflagen einer Hilfsvorrichtung ausgerichtet und der Zylinderkopf über diese Nocken gestülpt und eine weitgehend glatte Welle durch die jeweiligen Nocken-, Naben- und Gleitlager eingeführt und nach einer der obigen Montagemöglichkeiten vorgegangen. Die Montage ist wieder mit unterkühlter Welle und/oder erhitzten Nocken oder mittels Hochdruck aufgeweiteten, wie voranstehend beschrieben, Wellen möglich.

### BEZUGSZEICHENLISTE

- 10: Grundplatte
- 12: Auflagen für Ausgleichsgewichte
- 14: Ausgleichsgewichte
- 16: Auflagen für Zahnräder
- 18: Zahnräder
- 20: Auflagen
- 22: Ausgleichswelle
- 24: Vorrichtung zum Einschieben der Wellen
- 26: Gehäuse
- 27: offene Seite des Gehäuses
- 28: Bund
- 30: Durchführungen der Zahnräder
- 32: Durchführungen der Ausgleichsgewichte
- 34: Bohrungen Gehäuse

## Patentansprüche

1. Montageverfahren für einen Verbund, insbesondere für ein Massenausgleichsgetriebe oder einen Zylinderkopf, mit in einem Gehäuse (26) auf wenigstens einer das Gehäuse durchdringenden Welle (22) drehbar gelagerten Elementen, (14, 18) wie beispielsweise Ausgleichsmassen (14), Nocken, Zahnrädern (18), insbesondere für ein Kraftfahrzeug, **gekennzeichnet durch folgende Schritte,**
(a) Anordnen wenigstens einiger der einzelnen Elemente derart, daß die Elemente gemäß ihrer späteren relativen Position im Verbund zueinander angeordnet sind und entsprechende Durchführungen (30, 32) der Elemente für die Welle von auf einer Welle gemeinsam zu lagernden Elementen miteinander fluchten,
(b) Überstülpen des Gehäuses über die Elemente derart, daß entsprechende Durchführungen im Gehäuse für die wenigstens eine Welle mit den entsprechenden Durchführungen der Elemente fluchten und
(c) Durchschieben der Welle **durch** die Durchführungen der Elemente und des Gehäuses.

2. Verfahren nach Anspruch 1, **dadurch gekennzeichnet, daß** die Welle vor Schritt (c) derart abgekühlt wird, daß diese einen Außendurchmesser aufweist, der ein im wesentlichen kraftfreies Einschieben der Welle durch alle Durchführungen erlaubt.

3. Verfahren nach Anspruch 1 oder 2, **dadurch gekennzeichnet, daß** wenigstens einige Elemente vor Schritt (c) derart erwärmt werden, daß diese einen Innendurchmesser aufweisen, der ein im wesentlichen kraftfreies Einschieben der Welle durch alle Durchführungen erlaubt.

4. Verfahren nach Anspruch 3, **dadurch gekennzeichnet, daß** die erwärmten Elemente in einem zusätzlichen Schritt nach Schritt (b) und vor Schritt (c) erwärmt und in der in Schritt (a) genannten Weise angeordnet werden.

5. Verfahren nach Anspruch 1, **dadurch gekennzeichnet, daß** in Schritt (c) bei Raumtemperatur aller Teile die Welle mittels einer Pressen unter Kraftaufwand eingeschoben wird.

6. Verfahren nach einem der vorhergehenden Ansprüchen, **dadurch gekennzeichnet, daß** nach Schritt (c) die eingeschobene Welle einer Innendruck-Umformung unterzogen wird, so daß nacheinander oder gleichzeitig der Außendurchmesser der Welle wenigstens im Bereich der Elemente aufgeweitet wird.

7. Verfahren nach einem der vorhergehenden Ansprüchen, **dadurch gekennzeichnet, daß** die Welle derart eingeschoben wird, daß sich ein vorbestimmtes axiales Spiel einstellt.

8. Verfahren nach einem der vorhergehenden Ansprüchen, **dadurch gekennzeichnet, daß** in Schritt (a) die Elemente an einen festen axialen Anschlag angelegt werden.

9. Vorrichtung zur Montage von einem Verbund, insbesondere von einem Massenausgleichsgetriebe oder einem Zylinderkopf, mit in einem Gehäuse (26) auf wenigstens einer das Gehäuse (26) durchdringenden Welle (22) drehbar gelagerten Elementen (14, 18), wie beispielsweise Ausgleichsmassen (14), Nocken, Zahnrädern (18), insbesondere für ein Kraftfahrzeug, **dadurch gekennzeichnet, daß** die Vorrichtung Aufnahmen (12, 16) zum Einlegen oder Anordnen der Elemente (14, 18) und wenigstens einer Welle (22) derart aufweist, daß die Elemente (14, 18) gemäß ihrer späteren relativen Position im Verbund zueinander angeordnet sind und entsprechende Durchführungen (30, 32) für die Welle (22) von auf einer Welle (22) gemeinsam zu lagernden Elementen (14, 18) miteinander und mit der zugehörigen Welle (22) fluchten, und daß die Vorrichtung eine Auflage für das Gehäuse (26) derart aufweist, daß entsprechende Durchführungen (34) im Gehäuse (26) mit der Welle (22) und den Durchführungen (30, 32) der Elemente (14, 18) fluchten.

10. Vorrichtung nach Anspruch 9, **dadurch gekennzeichnet, daß** die Aufnahmen (12, 16) für die Elemente (14, 18) axiale Anschläge und/oder seitliche Führungen aufweisen.

11. Vorrichtung nach Anspruch 9 oder 10, **dadurch gekennzeichnet, daß** diese eine Vorrichtung (24) zum Einschieben der Welle (22) aufweist.

12. Vorrichtung nach Anspruch 11, **dadurch gekennzeichnet, daß** die Vorrichtung (24) zum Einschieben der Welle (22) hydraulisch oder pneumatisch betätigte Zylinder umfaßt.

## Claims

1. Assembly method for a composite structure, in particular for a mass-balancing transmission or a cylinder head, with elements (14, 18), such as, for example, balancing masses (14), cams, gearwheels (18), which are rotatably mounted in a housing (26) on at least one shaft (22) penetrating through the housing, in particular for a motor vehicle, **characterized by** the following steps,
(a) arrangement of at least some of the individual elements in such a way that the elements are arranged in relation to one another according to their subsequent relative position in the composite structure and corresponding leadthroughs (30, 32) for the shaft of elements to be mounted jointly on a shaft are in alignment with one another,
(b) slipping of the housing over the elements in such a way that corresponding leadthroughs in the housing for the at least one shaft are in alignment with the corresponding leadthroughs of the elements, and
(c) pushing of the shaft through the leadthroughs of the elements and of the housing.

2. Method according to Claim 1, **characterized in that**, before step (c), the shaft is cooled in such a way that it has an outside diameter which allows an essentially force-free pushing-in of the shaft through all the leadthroughs.

3. Method according to Claim 1 or 2, **characterized in that**, before step (c), at least some elements are heated in such a way that they have an inside diameter which allows an essentially force-free pushing-in of the shaft through all the leadthroughs.

4. Method according to Claim 3, **characterized in that** the heated elements are heated in an additional step after step (b) and before step (c) and are arranged in the way mentioned in step (a).

5. Method according to Claim 1, **characterized in that**, in step (c), with all the parts being at room temperature, the shaft is pushed in by means of pressing by the application of force.

6. Method according to one of the preceding claims, **characterized in that**, after step (c), the pushed-in shaft is subjected to internal pressure forming, so that the outside diameter of the shaft is widened, at least in the region of the elements, successively or simultaneously.

7. Method according to one of the preceding claims, **characterized in that** the shaft is pushed in in such a way that a predetermined axial play is established.

8. Method according to one of the preceding claims, **characterized in that**, in step (a), the elements are brought to bear against a fixed axial stop.

9. Device for assembling a composite structure, in particular a mass-balancing transmission or a cylinder head, with elements (14, 18), such as, for example, balancing masses (14), cams, gearwheels (18), which are mounted rotatably in a housing (26) on at least one shaft (22) penetrating through the housing (26), in particular for a motor vehicle, **characterized in that** the device has receptacles (12, 16) for the insertion or arrangement of the elements (14, 18) and of at least one shaft (22), in such a way that the elements (14, 18) are arranged in relation to one another according to their subsequent relative position in the composite structure and corresponding leadthroughs (30, 32) for the shaft (22) in elements (14, 18) to be mounted jointly on a shaft (22) are in alignment with one another and with the associated shaft (22), and **in that** the device has a support for the housing (26), in such a way that corresponding leadthroughs (34) in the housing (26) are in alignment with the shaft (22) and the leadthroughs (30, 32) of the elements (14, 18).

10. Device according to Claim 9, **characterized in that** the receptacles (12, 16) for the elements (14, 18) have axial stops and/or lateral guides.

11. Device according to Claim 9 or 10, **characterized in that** it has a device (24) for pushing in the shaft (22).

12. Device according to Claim 11, **characterized in that** the device (24) for pushing in the shaft (22) comprises hydraulically or pneumatically actuated cylinders.

## Revendications

1. Procédé de montage pour ensemble, notamment pour transmission à équilibrage de masse ou culasse, comportant des éléments (14, 18), comme par exemple des masses d'équilibrage (14), des cames, des engrenages (18), notamment pour véhicule automobile, en appui rotatif dans un boîtier (26) sur au moins un arbre (22) traversant le boîtier, **caractérisé par** les étapes suivantes :
(a) disposition d'au moins un des différents éléments de manière à ce que les éléments soient disposés les uns par rapport aux autres dans l'ensemble en fonction de leur position relative ultérieure et à ce que les passages correspondants (30, 32) des éléments pour l'arbre prévus dans les éléments à appuyer ensemble sur un arbre soient alignés les uns avec les autres,
(b) emboîtement du boîtier sur les éléments de manière à ce que les passages correspondants pour l'au moins un arbre prévus dans le boîtier soient alignés avec les passages correspondants prévus dans les éléments, et
(c) insertion de l'arbre dans les passages des éléments et du boîtier.

2. Procédé selon la revendication 1, **caractérisé en ce que** l'arbre est refroidi avant l'étape (c) de manière à présenter un diamètre extérieur qui permette une insertion sensiblement sans forcer de l'arbre dans tous les passages.

3. Procédé selon la revendication 1 ou 2, **caractérisé en ce qu'**au moins quelques éléments sont refroidis avant l'étape (c) de manière à présenter un diamètre intérieur qui permette une insertion sensiblement sans forcer de l'arbre dans tous les passages.

4. Procédé selon la revendication 3, **caractérisé en ce que** les éléments chauffés sont chauffés au cours d'une étape supplémentaire après l'étape (b) et l'étape (c) et disposés de la manière indiquée dans l'étape (a).

5. Procédé selon la revendication 1, **caractérisé en ce que** l'arbre est inséré au cours de l'étape (c), à température ambiante de toutes les pièces, au moyen d'une presse et sous application de force.

6. Procédé selon l'une quelconque des revendications précédentes, **caractérisé en ce qu'**après l'étape (c), l'arbre inséré est soumis à une déformation par pression interne, de sorte que le diamètre extérieur de l'arbre est successivement ou simultanément élargi du moins au niveau des éléments.

7. Procédé selon l'une quelconque des revendications précédentes, **caractérisé en ce que** l'arbre est inséré de manière à ce que s'installe un jeu axial prédéfini.

8. Procédé selon l'une quelconque des revendications précédentes, **caractérisé en ce qu'**au cours de l'étape (a), les éléments sont posés sur une butée axiale fixe.

9. Dispositif de montage d'un ensemble, notamment d'une transmission à équilibrage de masse ou d'une culasse, comportant des éléments (14, 18), comme par exemple des masses d'équilibrage (14), des cames, des engrenages (18), notamment pour un véhicule automobile, en appui rotatif dans un boîtier (26) sur au moins un arbre (22) traversant le boîtier (26), **caractérisé en ce que** le dispositif présente des supports (12, 16) pour le dépôt ou la disposition des éléments (14, 18) et au moins un arbre (22) de manière à ce que les éléments (14, 18) soient disposés dans l'ensemble les uns par rapport aux autres en fonction de leur position relative ultérieure et à ce que les passages correspondants (30, 32) pour l'arbre (22) prévus dans les éléments (14, 18) à appuyer ensemble sur un arbre (22) sont alignés les uns avec les autres et avec l'arbre corrélatif (22), et que le dispositif présente une embase pour le boîtier (26) de sorte que les passages correspondants (34) prévus dans le boîtier (26) soient alignés avec l'arbre (22) et les passages (30, 32) prévus dans les éléments (14, 18).

10. Dispositif selon la revendication 9, **caractérisé en ce que** les supports (12, 16) pour les éléments (14, 18) présentent des butées axiales et/ou des guides latéraux.

11. Dispositif selon la revendication 9 ou 10, **caractérisé en ce qu'**il présente un dispositif (24) pour l'insertion de l'arbre (22).

12. Dispositif selon la revendication 11, **caractérisé en ce que** le dispositif (24) pour l'insertion de l'arbre (22) comprend des vérins actionnés par système hydraulique ou pneumatique.
